# FASCICULE DE BREVET EUROPEEN

(11) **EP 1 527 954 B1**
(45) Date de publication et mention de la délivrance du brevet: **24.01.2007**
(21) Numéro de dépôt: 04292138.7
(22) Date de dépôt: 06.09.2004
(51) Int. Cl.: B60R 13/08

(54) **Elément de faux plancher multifonction comprenant des patins en mousse formant ressort d'un système "masse-ressort"**
Multifunktioneller Bodenbelag mit elastisch schaumgefüllten Massefederelementen
Multifunction false floor element comprising foam pads acting as springs of a " mass-spring " system

(30) Priorité: 30.10.2003 FR 0350751
(43) Date de publication de la demande: 04.05.2005
(73) Titulaire: Centre d'Etude et de Recherche pour l'Automobile (CERA), 51100 Reims (FR)
(72) Inventeur: Fayard, Jean-Marie, 51170 Faverolles et Coemy (FR); Ribes, Stéphane, 51100 Reims (FR)
(74) Mandataire: Sayettat, Julien Christian

(56) Documents cités:
- FR-A- 2 744 978
- GB-A- 2 216 081
- US-A- 5 171 619
- US-A- 5 483 028
- PATENT ABSTRACTS OF JAPAN vol. 015, no. 008 (M-1067), 9 janvier 1991 (1991-01-09) & JP 02 258331 A (NISSHINBO IND INC), 19 octobre 1990 (1990-10-19)

## Description

L'invention concerne un élément de faux plancher d'habitacle de véhicule automobile, un faux plancher formé d'une pluralité de ces éléments ainsi qu'un procédé de réalisation d'un élément de faux plancher.

Certains véhicules sont pourvus de tapis d'habitacle, de type « faux plancher », qui sont agencés pour recouvrir la tôle du plancher du véhicule en conférant au sol une planéité satisfaisante.

Ces faux planchers comprennent usuellement un corps rigide, comprenant des parties sensiblement planes, sur lequel est disposé un revêtement d'aspect tel qu'une moquette.

Certaines parties des faux planchers, qui ne sont pas en appui contre la tôle, ne présentent pas une rigidité suffisante pour résister à l'appui exercé par les passagers du véhicule.

Afin de satisfaire à cette contrainte de rigidité, on peut prévoir des organes de piètement, par exemple sous forme de plots, associés au faux plancher et destinés à venir en appui contre la tôle du plancher.

De plus, afin de garantir une bonne protection acoustique de l'habitacle, il est nécessaire d'interposer entre ces plots et la tôle de plancher une couche élastiquement déformable telle qu'un feutre. Cette couche joue un rôie de ressort dans un système d'isolation acoustique de type « masse-ressort » dont le corps rigide, disposé sur ladite couche, forme la masse.

Un tel faux plancher est décrit dans le document US-A-5,483,028.

Une telle réalisation présente l'inconvénient de nécessiter un composant spécifique, à savoir la couche déformable, et une étape complémentaire de montage, donc des surcoûts de fabrication.

Par ailleurs, un matériau tel qu'un feutre, sous l'effet d'une compression localisée très importante telle qu'elle peut être appliquée par un plot, présente des caractéristiques d'élasticité dégradées, ce qui réduit l'efficacité du système « masse-ressort ».

En outre, afin de conférer un certain confort au faux plancher, il peut être nécessaire d'associer entre le corps rigide et le revêtement d'aspect une autre couche élastiquement déformable.

Ainsi, un élément de faux plancher est constitué de divers composants dont l'assemblage s'avère complexe et coûteux.

Pour pallier ces inconvénients, l'invention propose un élément de faux plancher de réalisation simplifiée par rapport à l'art antérieur, qui intègre d'une pièce les fonctions de confort et d'isolation acoustique requises.

A cet effet et selon un premier aspect, l'invention concerne un élément de faux plancher d'habitacle de véhicule automobile, destiné à être disposé sur la tôle du plancher dudit véhicule, ledit élément comprenant un corps rigide réalisé à base de matériau plastique, ledit corps rigide comprenant au moins un organe formant piétement, ledit corps rigide étant enrobé par un corps en mousse souple, ledit corps en mousse recouvrant au moins la face externe de la zone inférieure de chaque organe.

Ainsi, l'élément de faux plancher comprend, intégré à lui en une seule étape lors de sa fabrication, de la mousse souple disposée dans la zone inférieure des organes de piètement. On forme ainsi des patins qui sont destinés à reposer sur la tôle du véhicule et qui assurent la fonction de ressort. Ceci évite ainsi le recours à l'utilisation d'une couche spécifique de ressort, disposée usuellement entre l'élément de faux plancher et la tôle dans une étape complémentaire de fabrication.

Selon une réalisation, des organes de piètement comprennent un plot creux réalisé d'une pièce avec le corps rigide, ledit plot comprenant une ouverture en sa zone supérieure et un orifice en sa zone inférieure, le corps en mousse s'étendant de part et d'autre dudit orifice.

La présence d'un tel orifice permet, de manière particulièrement simple, de réaliser un élément de faux plancher pourvu de mousse sur les faces supérieure et inférieure du corps rigide, et notamment sur la zone de l'organe destinée à être disposée en regard de la tôle.

Dans une autre réalisation, des organes de piètement comprennent une pièce rapportée, ladite pièce étant sensiblement entièrement enrobée par le corps en mousse.

Une telle réalisation s'avère particulièrement adaptée lorsqu'une pièce formant conduit d'air est disposée sous le corps rigide, par association avec ledit corps rigide, ladite pièce étant destinée par ailleurs à former piétement. Son enrobage par la mousse permet d'assurer à la fois une isolation thermique et acoustique du conduit, notamment contre les bruits de convection. En outre, la mousse d'enrobage assure une fonction de ressort dans le système « masse-ressort » constitué par l'élément de faux plancher.

Afin de conférer un confort et une esthétique à l'élément de faux plancher, le corps en mousse peut former une couche sur la face supérieure du corps rigide, ladite couche étant recouverte d'un revêtement textile tel qu'une moquette.

L'élément de faux plancher peut être associé, moulé d'une pièce avec le corps rigide, à un repose-pied de sécurité, ledit repose-pied étant relié audit corps rigide de manière sécable.

Un tel repose pied, réalisé usuellement comme pièce isolée, est intégré ici à l'élément de faux plancher, avec les avantages qui en découlent en termes de simplification de fabrication et de montage.

Sa jonction avec l'élément de faux plancher est réalisée par une zone de moindre résistance, agencée pour être rompue en cas de déformation de la tôle du véhicule lors d'un accident, ceci de façon à repousser le pied du passager tout en le maintenant dans une inclinaison sensiblement constante.

Ainsi, la réalisation d'un élément de faux plancher selon l'invention permet de répondre de façon simple et économique à plusieurs exigences, notamment en termes de confort au toucher, protection thermique et acoustique.

Selon un deuxième aspect, l'invention concerne un faux plancher d'habitacle destiné à être disposé sur la tôle du plancher, comprenant une pluralité d'éléments de faux plancher tels que décrits ci-dessus.

Ces éléments sont disposés de façon contiguë de sorte à couvrir la tôle de plancher.

Selon un troisième aspect, l'invention concerne un procédé de réalisation d'un élément de faux plancher tel que décrit ci-dessus, comprenant les étapes suivantes :
- prévoir un corps rigide comprenant au moins un organe formant piètement et le disposer dans un moule de moulage par injection-réaction (RIM) ;
- verser dans le moule un mélange précurseur de mousse destiné à surmouler le corps rigide ;
- démouler l'élément après expansion et polymérisation de la mousse.

Le procédé peut en outre comprendre l'étape suivante :
- disposer dans le moule un revêtement textile étanche à la mousse préalablement à l'introduction du mélange précurseur de mousse, ladite mousse étant destinée à s'associer en envers du revêtement textile.

Le moule est agencé pour permettre la formation de mousse recouvrant au moins la face externe de la zone inférieure de (des) l'organe(s) de piètement.

D'autres objets et avantages de l'invention apparaîtront dans la description qui suit, faite en référence aux dessins annexés dans lesquels :
La figure 1 est une vue schématique partielle en coupe d'un élément de faux plancher selon l'invention, après montage dans son environnement;
La figure 2 est une vue schématique partielle en coupe d'un élément de faux plancher pourvu d'un repose pied de sécurité, après montage dans son environnement.

Dans la description, par les termes « inférieur » et « supérieur », on fait référence aux positions par rapport à un véhicule disposé en configuration d'utilisation.

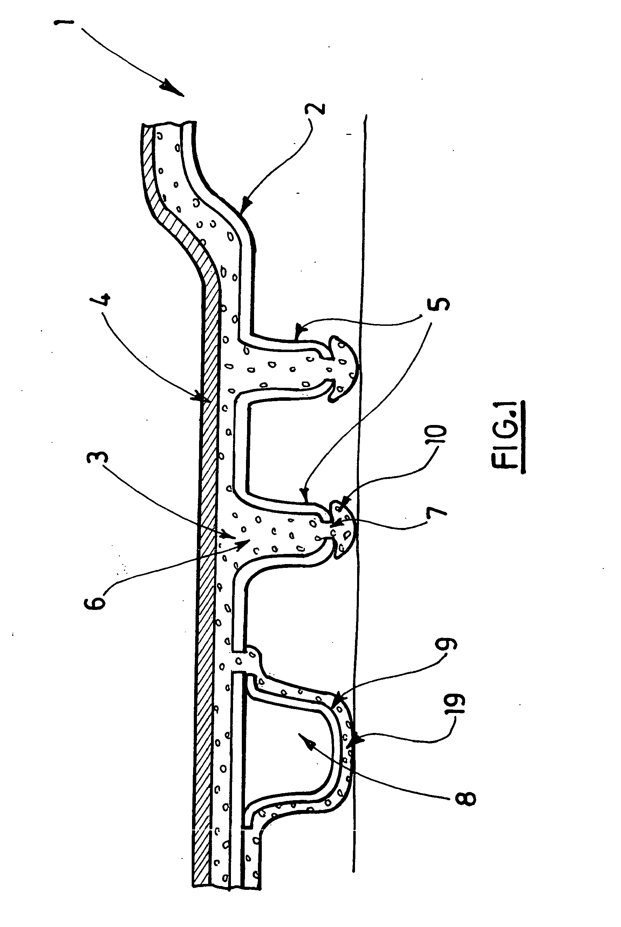

En référence à la figure 1, on décrit à présent un élément 1 de faux plancher comprenant un corps rigide 2 et un corps en mousse 3 surmoulant ledit corps rigide.

Une moquette 4 est disposée contre une couche de la mousse disposée sur la face supérieure du corps rigide 2.

Le corps rigide est pourvu d'organes de piètement, tels que des plots 5 creux présentant une ouverture 6 en leur zone supérieure et un orifice 7 en leur zone inférieure, la zone inférieure formant le fond dudit plot.

Le passage de la mousse à travers les orifices 7 lors de l'opération de surmoulage permet de réaliser des patins 10 sur la face externe de la zone inférieure. La forme de ces patins est définie par une cavité prévue dans le moule à cet effet.

Les patins 10 assurent la fonction de ressort dans le système « masse-ressort » constitué par l'élément de faux plancher.

Dans la réalisation représentée, l'élément 1 comprend en outre des conduits d'air 8, réalisés par association d'une gorge 9 sur la face inférieure de la partie plane de l'élément 1.

Les conduits d'air 8 sont enrobés de mousse, ceci afin de réaliser une protection thermique et acoustique vis à vis des bruits de convection de l'air.

Ils peuvent en outre former organes de piètement, auquel cas la mousse 19 destinée à être disposée en regard de la tôle offre une fonction supplémentaire de ressort.

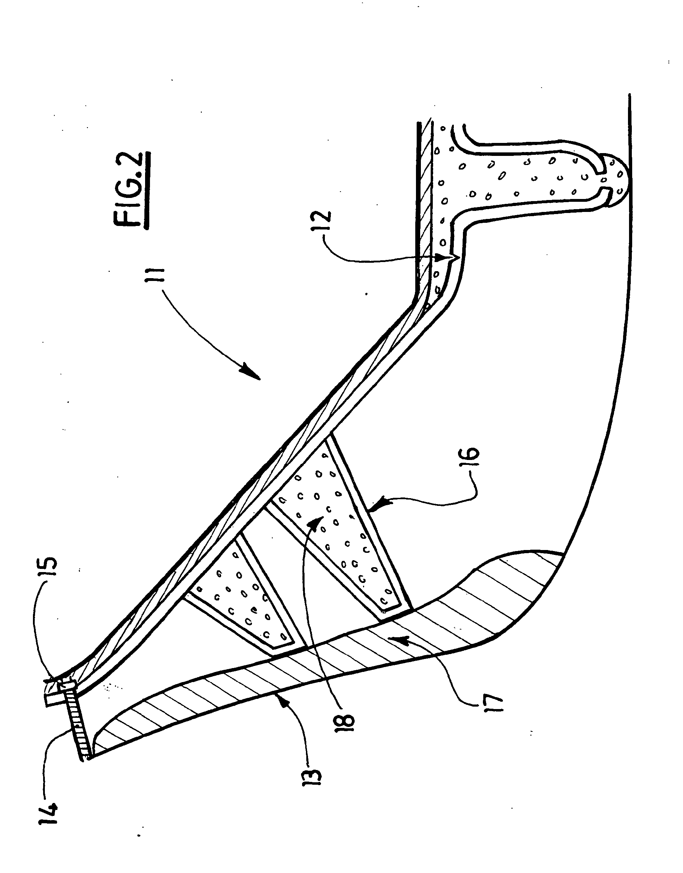

En référence à la figure 2, on décrit à présent un élément de faux plancher pourvu d'un repose-pied de sécurité 11.

Le repose-pied 11 est moulé d'une pièce avec le corps rigide 2 et est relié à lui dans sa partie inférieure par une zone de moindre résistance 12 réalisée par un amincissement localisé de matière.

Le repose-pied 11 est ainsi relié au corps rigide 2 de manière sécable.

Dans sa partie supérieure, le repose-pied 11 est relié à la tôle 13 au moyen d'au moins une tige filetée 14, appelée « tucker », solidaire de la tôle et passant par un orifice prévu dans le repose-pied, et d'un écrou 15.

Des éléments d'appui creux 16, moulés d'une pièce avec le repose-pied 11, et placés en appui contre une couche insonorisante 17 disposée en regard de la tôle 13, permettent d'empêcher un déplacement non voulu du repose-pied vers la tôle pouvant occasionner une rupture de la zone 12. Afin de présenter une meiiieure résistance, les éléments 16 peuvent être remplis d'une mousse 18.

Lors d'un choc accompagné d'une déformation de la tôle 13, la tige filetée 14 repousse le repose-pied 11 qui se sépare du corps rigide 2 au niveau de la zone 12, ce qui a pour effet de déplacer le pied du passager selon un angle sensiblement constant et d'assurer ainsi sa sécurité.

## Revendications

1. Elément de faux plancher (1) d'habitacle de véhicule automobile, destiné à être disposé sur la tôle du plancher dudit véhicule, ledit élément comprenant un corps rigide (2) réalisé à base de matériau plastique, ledit corps rigide étant pourvu d'au moins un organe formant piètement (5,8), ledit élément étant **caractérisé en ce que** ledit corps rigide est enrobé par un corps en mousse souple (3), ledit corps en mousse recouvrant au moins la face externe de la zone inférieure de chaque organe (5,8).

2. Elément de faux plancher selon la revendication 1, **caractérisé en ce que** des organes de piètement comprennent un plot creux (5) réalisé d'une pièce avec le corps rigide (2), ledit plot comprenant une ouverture (6) en sa zone supérieure et un orifice (7) en sa zone inférieure, le corps en mousse (3) s'étendant de part et d'autre dudit orifice.

3. Elément de faux plancher selon la revendication 1 ou 2, **caractérisé en ce que** des organes de piètement comprennent une pièce rapportée (8), ladite pièce étant sensiblement entièrement enrobée par le corps en mousse (3).

4. Elément de faux plancher selon la revendication 3, **caractérisé en ce que** la pièce rapportée (8) forme conduit d'air sous la face inférieure du corps rigide (2).

5. Elément de faux plancher selon l'une quelconque des revendications 1 à 4, **caractérisé en ce que** le corps en mousse (3) comprend une couche s'étendant en regard de la face supérieure du corps rigide (2), la face supérieure de ladite couche étant recouverte d'un revêtement textile (4).

6. Elément de faux plancher selon l'une quelconque des revendications 1 à 5, **caractérisé en ce qu'**il lui est associé, moulé d'une pièce avec le corps rigide (2), un repose-pied de sécurité (11), ledit repose-pied étant relié audit corps rigide de manière sécable.

7. Faux plancher d'habitacle de véhicule automobile, destiné à être disposé sur la tôle du plancher dudit véhicule, **caractérisé en ce qu'**il comprend une pluralité d'éléments de faux plancher (1) selon l'une quelconque des revendications 1 à 5.

8. Faux plancher d'habitacle de véhicule automobile selon la revendication 7, **caractérisé en ce qu'**il comprend en outre au moins un élément de faux plancher selon la revendication 6.

9. Procédé de réalisation d'un élément de faux plancher selon l'une quelconque des revendications 1 à 6, **caractérisé en ce qu'**il comprend les étapes suivantes :
- prévoir un corps rigide (2) comprenant au moins un organe formant piètement (5,8) et le disposer dans un moule de moulage par injection-réaction (RIM) ;
- verser dans le moule un mélange précurseur de mousse destiné à surmouler le corps rigide (2) ;
- démouler l'élément (1) après expansion et polymérisation de la mousse.

10. Procédé de réalisation d'un élément de faux plancher selon la revendication 9, **caractérisé en ce qu'**il comprend en outre l'étape suivante :
- disposer dans le moule un revêtement textile (4) étanche à la mousse préalablement à l'introduction du mélange précurseur de mousse, ladite mousse étant destinée à s'associer en envers du revêtement textile (4).

## Claims

1. False floor component (1) of motor vehicle passenger compartment, intended to be arranged on the sheet metal of the floor of said vehicle, said component comprising a rigid body (2) made of a plastic material base, said rigid body being equipped with at least one device forming a support (5,8), said component being **characterised in that** said rigid body is covered with a soft foam body (3), said foam body covering at least the external face of the bottom zone of each device (5,8).

2. False floor component according to claim 1, **characterised in that** support devices comprise a hollow block (5) made of one part with the rigid body (2), said block comprising an opening (6) in its top zone and an orifice (7) in its bottom zone, the foam body (3) extending along said orifice.

3. False floor component according to claim 1 or 2, **characterised in that** the support devices comprises a mounted part (8), said part being substantially entirely covered by the foam body (3).

4. False floor component according to claim 3, **characterised in that** the mounted part (8) forms an air duct under the bottom face of the rigid body (2).

5. False floor component according to any of claims 1 to 4, **characterised in that** the foam body (3) comprises a layer extending opposite the top face of the rigid body (2), the top face of said layer being covered with a textile covering (4).

6. False floor component according to any of claims 1 to 5, **characterised in that** it is combined, moulded in one piece with the rigid body (2), with a safety foot rest (11) said foot rest being connected to said rigid body in a divisible manner.

7. Motor vehicle passenger compartment false floor, intended to be arranged on the sheet metal of said vehicle, **characterised in that** it comprises a plurality of the false floor components (1) according to any of claims 1 to 5.

8. Motor vehicle passenger compartment false floor according to claim 7, **characterised in that** it also comprises at least one false floor component according to claim 6.

9. Method to produce a false floor component according to any of claims 1 to 6, **characterised in that** it comprises the following steps:
- providing a rigid body (2) comprising at least one device forming a support (5,8) and arranging it in a reaction injection moulding (RIM) mould;
- pouring into the mould a precursor foam mixture intended to mould the rigid body (2);
- releasing the component (1) from the mould after expansion and polymerisation of the foam.

10. Method to produce a false floor component according to claim 9, **characterised in that** it also comprises the following step:
- arranging in the mould a foam-tight textile covering (4) prior to the introduction of the precursor foam mixture, said foam being intended to be combined on the reverse side of the textile covering (4).

## Patentansprüche

1. Doppelbodenelement (1) eines Kraftfahrzeuginnenraumes, das zur Anordnung auf dem Bodenblech des besagten Fahrzeugs bestimmt ist, wobei das besagte Element einen starren Körper (2) umfasst, der auf Kunststoffbasis hergestellt ist, wobei der besagte starre Körper mit mindestens einem Organ versehen ist, das ein Fussgestell (5,8) bildet und das besagte Element **dadurch gekennzeichnet ist, dass** der besagte starre Körper von einem Körper aus weichem Schaum (3) umgeben ist, wobei der besagte Körper aus Schaum zumindest die Außenseite des Innenbereichs jedes Organs (5, 8) umgibt.

2. Doppelbodenelement gemäß Anspruch 1, **dadurch gekennzeichnet, dass** Fussgestellorgane einen hohlen Kontakt (5) umfassen, der mit dem starren Körper (2) aus einem Stück hergestellt wurde, wobei der besagte Kontakt in seinem oberen Bereich eine Öffnung (6) hat und eine Öffnung (7) in seinem unteren Bereich, wobei der Körper aus Schaum (3) beidseitig der besagten Öffnung erstreckt.

3. Doppelbodenelement gemäß Anspruch 1 oder 2, **dadurch gekennzeichnet, dass** Fussgestellorgane ein eingesetztes Stück (8) umfassen, wobei das besagte Stück deutlich vollkommen von dem Körper aus Schaum (3) umgeben ist.

4. Doppelbodenelement gemäß Anspruch 3, **dadurch gekennzeichnet, dass** das eingesetztes Stück (8) eine Luftleitung unter der Unterseite des starren Körpers (2) bildet.

5. Doppelbodenelement gemäß einem der Ansprüche 1 bis 4, **dadurch gekennzeichnet, dass** der Körper aus Schaum (3) eine Schicht umfasst, die sich en regard de la Oberseite des starren Körpers (2) erstreckt, wobei die Oberseite der besagten Schicht von einer Textilbeschichtung (4) umgeben ist.

6. Doppelbodenelement gemäß einem der Ansprüche 1 bis 5, **dadurch gekennzeichnet, dass** es mit einer Sicherheitsfußstütze (11) verbunden ist, die zusammen mit dem starren Körper (2) aus einem Stück gegossen ist, wobei die besagte Fußstütze mit dem besagten starren Körper teilbar verbunden ist.

7. Doppelboden eines Kraftfahrzeuginnenraumes, das zur Anordung auf dem Bodenblech des besagten Fahrzeugs bestimmt ist, **dadurch gekennzeichnet, dass** es eine Vielzahl von Elementen des Doppelbodens (1) gemäß einer der Ansprüche 1 bis 5 umfasst.

8. Doppelboden eines Kraftfahrzeuginnenraumes gemäß Anspruch 7, **dadurch gekennzeichnet, dass** es außerdem mindestens ein Element des Doppelbodens gemäß Anspruch 6 umfasst.

9. Verfahren zur Herstellung eines Doppelbodenelementes gemäß einem der Ansprüche 1 bis 6, **dadurch gekennzeichnet, dass** es folgende Stufen umfasst:
- Vorsehen eines starren Körpers (2), der mindestens ein Organ umfasst, das ein Fussgestell (5, 8) bildet und Anordnen des Körpers in einer Gießform durch Reaktionsspritzgiessen;
- Gießen einer Mischung aus Vorreiterschaum in die Gießform, das bestimmt ist zum Formen des starren Körperd (2) nach dem Gussstück;
- Aus der Form nehmen des Elementes (1) nach der Ausdehnung und Polymerisation des Schaums.

10. Verfahren zur Herstellung eines Doppelbodenelementes gemäß Anspruch 9, **dadurch gekennzeichnet, dass** es außerdem folgende Stufe umfasst:
- Anordnen einer Textilbeschichtung (4) in der Gießform, wobei die Beschichtung gegenüber dem Schaum dicht ist, vor dem Zuführen der Mischung aus Vorreiterschaum, wobei der besagte Schaum für die Verbindung mit der Textilbeschichung (4) vorgesehen ist.
